# EUROPEAN PATENT SPECIFICATION

(11) **EP 2 136 371 B1**
(45) Date of publication and mention of the grant of the patent: **01.02.2012**
(21) Application number: 08425436.6
(22) Date of filing: 19.06.2008
(51) Int. Cl.: G11B 33/04, B65D 27/34, B42D 15/04

(54) **Postal envelope designed to contain one or more objects with two-dimensional development, in particular CDs, DVDs, or credit cards**
Briefumschlag für ein oder mehrere zweidimensionale Objekte, insbesondere CDs, DVDs oder Kreditkarten
Enveloppe postale conçue pour contenir un ou plusieurs objets avec un développement bidimensionnel, en particulier des CD, DVD ou des cartes de crédit

(43) Date of publication of application: 23.12.2009
(73) Proprietor: MAF di Mastalia Anella & C. sas, 84131 Salerno (IT)
(72) Inventor: Mastalia, Carmine, 84123 Salerno (IT)
(74) Representative: Sarpi, Maurizio

(56) References cited:
- EP-A- 1 466 845
- WO-A-2008/017057
- DE-U1- 29 705 549
- FR-A- 2 852 293
- US-A- 3 693 869
- US-A- 4 597 591
- US-A1- 2003 183 680
- US-B2- 6 905 019

## Description

The present invention relates to the sector of paper artwork and in particular regards a postal envelope designed to contain one or more objects with two-dimensional development, in particular at least one CD (Compact Disk) or DVD (Digital Versatile Disk), but even a credit card, or else a key or a chain.

More in particular, the envelope is formed starting from a sheet divided into at least two parts: a first part, designed to receive the CD, and a second part, which can be folded in book fashion on the previous one, to cover the CD, and which can be glued thereto.

The space for the name and address of the addressee, as well as for the stamps, can be provided on the face in view of one of the two parts.

According to the invention, the first part is provided with two opposite foldable flaps that prevent the CD from coming out, at the top or at the bottom, once the aforesaid parts have been glued.

There are other several patents (WO2008/017057 US-A-4 597 591, US-A-3 693 869, DE297 05 549 , FR-A-2 852 293 and US2003/183680), related to packaging and mailing apparatus for mailing of optical discs and other memory devices where a sheet having a substantial rectangular shape is divided into at least two parts: a first part which is designed to receive said disk and a second part which can be folded in book fashion and can be glued on said first part. US 6 905 019 B2 describes an insert for a magazine with a folded recording medium compartment corresponding to the preamble of the independent claim. However the disclosed solutions do not permit to provide an envelope having a large space for insertion of an advertising and /or promotional message, without any possibility for the CD contained therein coming out accidentally of the envelope, and in the same time easy to open.

Already known to the art is also a CD-holder card that is designed to incorporate a CD, in such a way that it can be removed therefrom, within an impression made in the thickness of one of its faces.

One disadvantage lies in the fact that it is possible for the CD, given that it is visible on one face of the card, to be removed by an ill-intentioned person before it reaches the addressee.

Consequently, the main task of the present invention is to overcome this disadvantage by providing an envelope designed to contain and hide one or more objects with two-dimensional development, in particular at least one CD/DVD, preventing this from possibly coming out of said envelope, unless there is an evident tampering with the envelope itself.

Advantageously, the postal envelope is a purposely designed envelope that is simple to produce.

This has been obtained starting from a sheet preferably having three parts set alongside one another: a central part designed to be occupied by the CD/DVD and provided with two opposed foldable flaps or tabs, which are designed to be folded over the central part itself, partially covering the edges of said CD/DVD; a foldable side part, which is designed to be folded in book fashion on said central part to cover the disk completely, until it comes into contact therewith, and which can be glued thereto; and a remaining side part dedicated to the data of the addressee and the stamps.

A better understanding of the present invention will be obtained from the ensuing detailed description with reference to the attached plates of drawings, which illustrate, purely by way of example, two preferred embodiments thereof.

In the plates of drawings:
Figure 1 is a front view of the sheet that constitutes the postal envelope the invention in a first embodiment not forming part of, but useful for the understanding before the envelope is closed;
Figure 2 is a front view of the sheet represented in Figure 1 where the central part is occupied by a CD, and the two flaps that project from said central part are folded over said CD;
Figure 3 is a front view of the postal envelope in a closed configuration ready for dispatch;
Figures 4 and 5 show a second embodiment of the postal envelope of Figure 1 respectively before the envelope is closed and in a closed configuration ready for dispatch;
Figure 6 shows the postal envelope of Figure 5 while the CD is being taken out by the addressee;
Figure 7A is the front view of a third embodiment of the postal envelope not forming part of, but useful for the understanding of the invention before packaging of the envelope itself;
Figure 7B is the rear view of Figure 7A;
Figure 8 shows the envelope of Figure 7A in a closed configuration ready for dispatch;
Figure 9 shows the envelope of Figure 8 when the CD is taken out;
Figure 10A is a front view of a fourth embodiment representing the invention, of the postal envelope of Figure 7 before the envelope itself is closed;
Figure 10B is a rear view of the embodiment of Figure 10A;
Figure 11 shows the envelope of Figure 10A in a closed configuration ready for dispatch; and
Figure 12 shows the envelope of Figure 11 while the CD is being taken out by the addressee; and
Figures 13A-15 show views, respectively similar to those of Figures 10A-12, of a variant of the fourth embodiment.

The ensuing description refers to a CD, but it is evident that it can be applied without modifications also to other objects with two-dimensional development such as, for example, DVDs, credit cards, chains, medals, etc., and other gadgets.

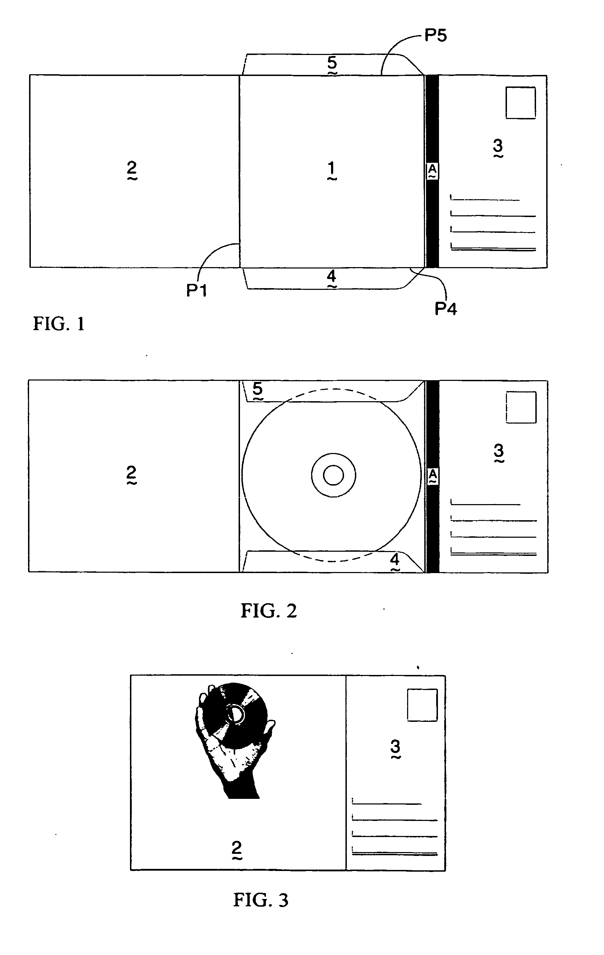

With particular reference to Figures 1 to 3, the postal envelope forming the subject of the invention is made up of a sheet having a substantially rectangular shape, which is preferably divided into three parts set alongside one another:
- a central part 1 reserved for receiving at least one CD;
- a foldable side part 2, which is designed to be folded in book fashion on said central part 1 in order to be laid on top of it so as to cover the CD completely, and which can be glued thereto; and
- a remaining side part 3, for the data of the addressee and the stamps.

According to a peculiar characteristic of the invention, the central part 1 is provided with two foldable flaps 4, 5, which project respectively from the bottom and top sides of said central part and are designed to be folded over the central part itself after the CD has been positioned on said central part so as to cover the CD partially.

Once the CD has been laid on the central part 1, in order to form the postal envelope, it is sufficient to fold first the two flaps 4, 5 on the central part 1, then fold in book fashion the side part 2 on the adjacent central part 1 until they are set on top of one another, and finally glue the end edge of the side part 2 with the corresponding area of the central part 1.

It is evident from the figures that the side part 2 has dimensions such as to cover the CD once it is folded over the central part 1, leaving simultaneously uncovered the side part 3 of the sheet provided with a space for the data of the addressee and the stamps.

In order to fix the end edge of the side part 2 to the corresponding area of the central part 1, it is preferable to provide an adhesive area A on the area of the central part 1 involved and/or on the end edge itself of the foldable side part 2.

To enable the side part 2 to be folded in book fashion on the central part 1, provided between said two parts 1 and 2 is a transverse folding line P1.

Likewise, to enable each flap 4, 5 to be folded over the central part 1, a respective longitudinal folding line P4, P5 is provided between each flap and said central part 1.

As may be seen in Figure 3, the CD that the sender intends to send is completely enclosed inside the envelope, and remaining in view there is only the opposite face of the side part 2 folded in book fashion and the side part 3 with the space for the data of the addressee and the stamps.

A first advantage is represented by the fact that folding of the two flaps 4 and 5 and of the side part 2 on the central part 1 creates a case for the CD contained therein without any possibility of said CD coming out of the envelope accidentally or of somebody managing to take the CD out of the envelope without tampering with it.

It is evident that the only way to take the CD contained in the envelope out is to detach the parts 1 and 2 that are gluedtogether. It is consequently easy to understand whether someone has tampered with the envelope.

A second advantage is represented by the fact that the face in view of the side part 2 is provided with a space for insertion of an advertising and/or promotional message and/or a picture and/or a decoration, so that, in addition to its specific postal use, the envelope has a function of promotional and/or advertising vehicle.

It is evident that the same advertising message, or else a different message, can be printed on each face in view of the other parts of the sheet, i.e., the central part 2 and the side part 3. Alternatively, the message can also involve the entire surface of the sheet that remains in view.

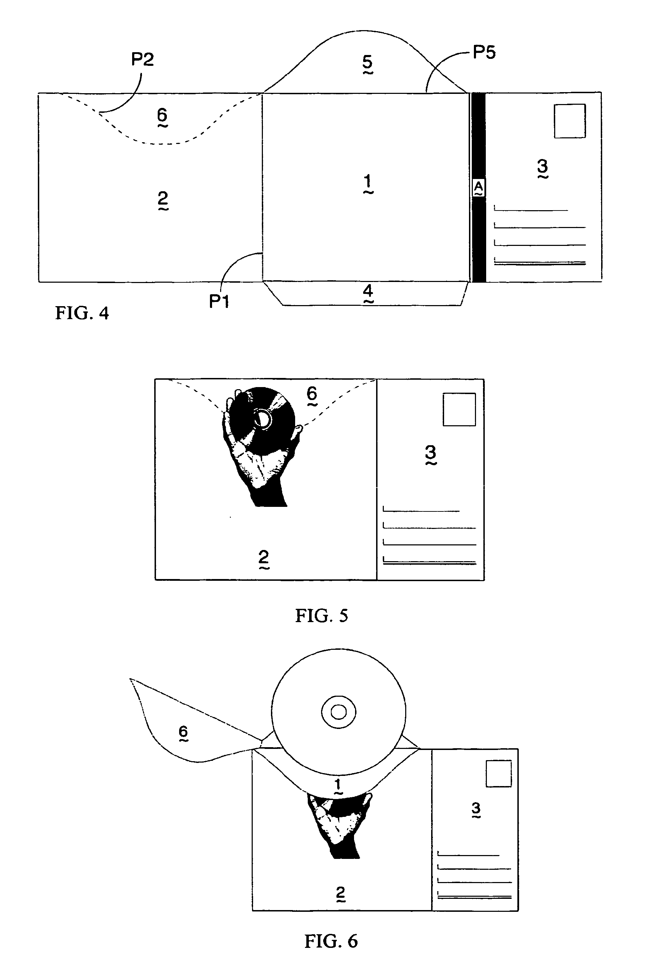

In a second embodiment, shown in Figures 4 to 6, it is envisaged that the foldable side part 2 will be provided with a line of perforations P2 designed to define a portion or area 6 of an appropriate shape, which can be separated, by being detached, from said side part 2.

According to a further peculiar characteristic of the invention, the detachable area 6 made on said side part 2 has a shape that substantially coincides with a flap 4 or 5 of the central part 1 and is in a position such that, when said side part 2 is folded over the central part 1, it is set on top of one of the flaps 4, 5 to facilitate opening thereof and removal of the disk.

In the second embodiment described, the two flaps 4, 5 have different shapes, and the area 6 has substantially the shape of the flap 5.

In this case, the person who receives the envelope will extract the CD by simply separating, by detaching it, the area 6 from the side part 2 and pulling out the flap 5 underlying said removed portion 6, without any need to detach the glued portions of the central part 1 and side part 2.

According to a peculiar characteristic of the invention, if only the area 6 has to be separated to take the CD out, it is advantageously possible to re-insert the CD in the envelope thus using the latter as CD case also once the area 6 has been removed.

According to the invention, it is possible to provide a further line of perforations to enable separation by detachment of the side part 3 assigned for the data of the addressee and the stamps from the envelope so as to limit the overall dimensions of the envelope, which can be used as case for CD.

As has been described in the previous example, it is possible to print one or more advertising messages on the envelope and render it a promotional vehicle. It is moreover possible to print an advertising and/or promotional message and/or a picture and/or a decoration also on the face in view of the removable area 6.

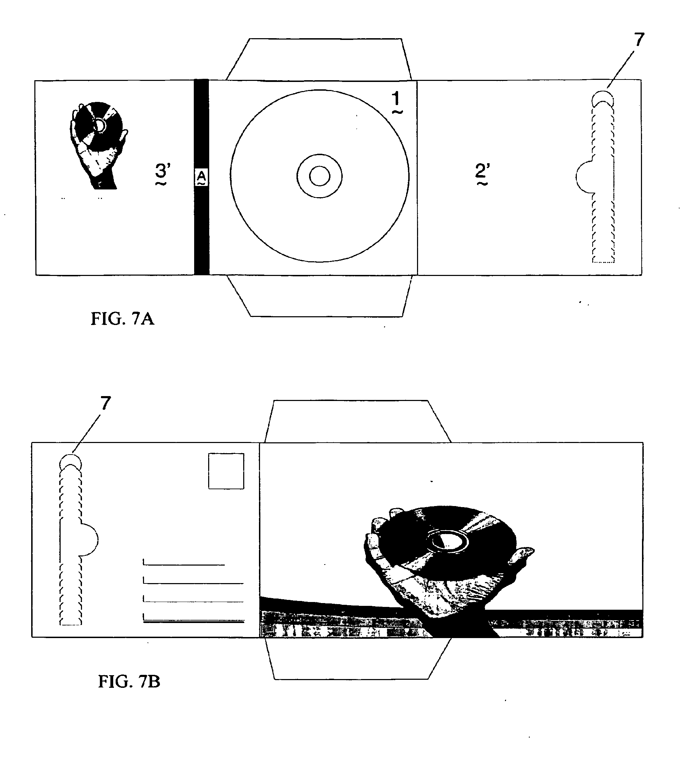

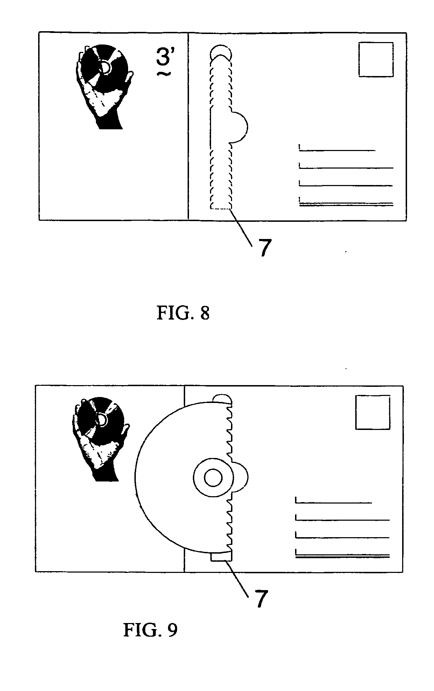

In a third embodiment, shown in Figures 7A to 9, the postal envelope is made up of a sheet having a substantially rectangular shape, which is preferably divided into three parts set alongside one another:
- a central part 1 reserved for receiving at least one CD;
- a side part 3', reserved for the message and/or one or more images by the sender; and
- a foldable side part 2' , which is designed to be folded in book fashion on said central part 1 in order to be laid on top of it so as to cover the CD completely, and which can be glued thereto, as well as being provided with a space for the data of the addressee and the stamps.

Said space on the envelope for the data of the addressee and the stamps is positioned on the side part 2' in such a way as to remain on the face in view of the envelope, once said part 2' has been folded over the central part 1.

In other words, when the envelope is formed, the foldable side part 2' is glued to the first part 1 so as to cover the disk, whilst the side part 3' contains the message of the sender.

In order to glue the end edge of the foldable side part 2' on the corresponding area of the central part 1, an adhesive area A is provided on said corresponding area of the central part 1 and/or on said end edge of the side part 2'.

To enable the disk to be taken out of the envelope easily, it is preferable to provide on the foldable side part 2' a tear-away tab 7 designed to be raised in order to be separated, by being detached, from the side part 2' itself.

For said purpose, said tab 7 is defined by a line of perforations.

It is worthwhile noting that, in order to enable the disk to be taken out, the length of said tear-away tab 7 must be at least equal to the diameter of the disk contained in the envelope.

In the example described, said tab 7 is substantially transverse to the envelope itself.

Consequently, to take the disk out, it is sufficient to lift said tab 7 tearing it away from the foldable side part 2', without having to detach the parts 1 and 2' that are glued together.

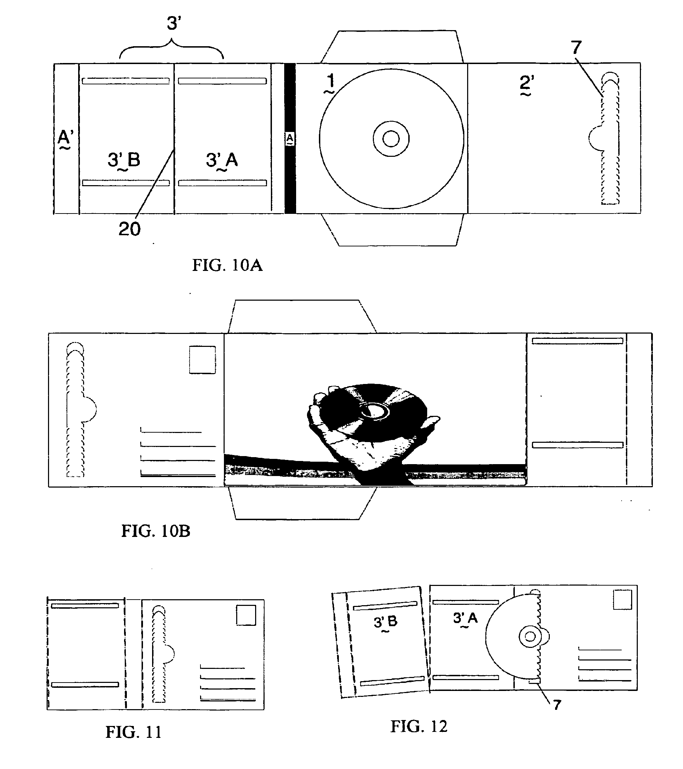

In a fourth embodiment shown in Figures 10A-12 which represents the invention, in order to hide appropriately from view the message and/or the images of the sender, written or printed on the side part 3', it is envisaged that the latter will be divided into two adjacent portions: a first portion 3'A, which is set alongside the first part 1, and a second, end, portion 3'B, which can be folded in book fashion on said first portion 3'A and can be glued thereto.

To enable the second, end, portion 3' B to be folded in book fashion on the adjacent one 3'A, a transverse folding line is provided between said two portions.

It is preferable to envisage that said folding line will be perforated to enable the user to separate, by detaching it, the second, end, portion 3' B from the first portion 3' A.

In order to glue the end edge of the second portion 3'B to the corresponding area of the first portion 3' A an gluing area A' is provided on the area involved of the first portion 3'A and/or on the end edge itself of the foldable portion 3'B.

Said end edge is delimited by a line of perforations 20 designed to enable opening of the portions 3' A and 3'B by the addressee.

In fact, in order to read the message and/or see the images of the sender, it is sufficient to tear the portion 3'B from its end edge and open said portion 3'B.

As has been described in the previous examples, said second portion 3'B is provided on its face in view with a space reserved for an advertising and/or promotional message and/or a picture and/or a decoration and/or a further message by the sender.

According to the invention, in the example described, the side part 3' is to the left of the central part 1, whilst the side part 2' that can be folded on said central part 1 is to the right of the latter.

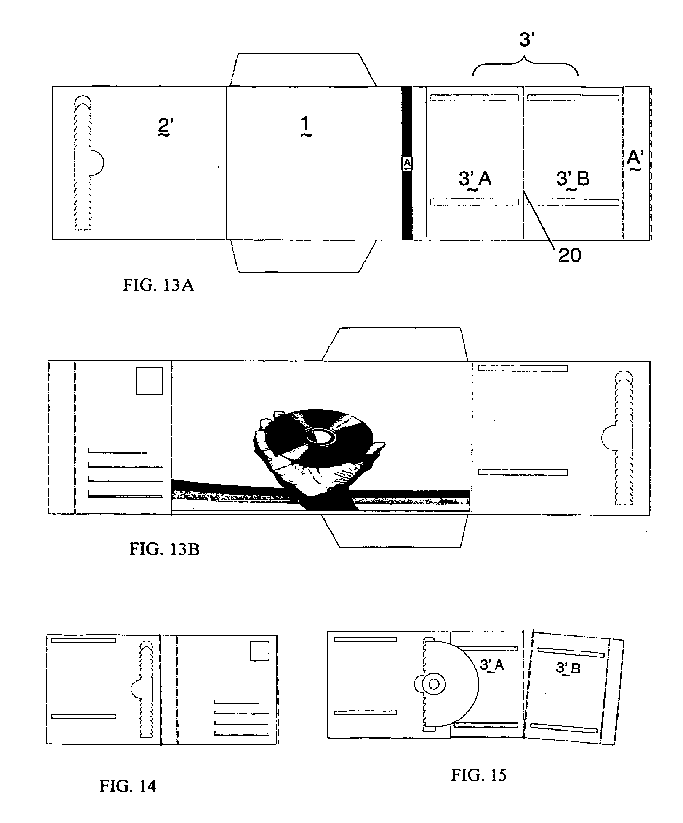

In a variant of this fourth embodiment, shown in Figure 13A-15, it is envisaged that the space for the data of the addressee and the stamps is on the side part 3' reserved for the message and/or for one or more images by the sender. Said space for the data of the addressee and the stamps is on the face in view of the portion 3'B, instead of on the face in view of the side part 2' . On the latter there may be written or printed an advertising and/or promotional message and/or a picture and/or a decoration and/or a further message by the sender.

In the example that is described, the side part 3' is to the right of the central part 1, whilst the side part 2', which can be folded on said central part 1, is to the left of the latter.

Advantageously, it is possible upon request of the sender, to print the message on the side part 3' at the moment of closing of the envelope, instead of being written by hand by the sender himself.

The present invention has been described and illustrated according to some preferredembodiments, but it is understood that modifications and/or equivalent replacements may be made any person skilled in the branch, without thereby departing from the sphere of protection of the present industrial patent right as defined in the appended claims. For example, it is evident that the envelope can have different dimensions according to the dimensions of the disk that it is to contain. In particular, the is provided an envelope for containing a 3 ½" CD and an envelope for containing a 5 ¼" disk.

## Claims

1. A postal envelope designed to contain one or more objects with two-dimensional development, in particular at least one CD or DVD, comprising a sheet having a substantially rectangular shape, which is divided into at least two parts:
a first part (1) designed to receive at least one disk and provided with two opposed foldable flaps (4,5) designed to prevent the disk from coming out of the envelope, and
a foldable side part (2) which is designed to be folded in book fashion on said first part (1) and that can be glued on said first part, in order to cover the disk received on said first part but not cover a portion of the first part that corresponds to the remaining side part (3') of the first part, wherein
the foldable side part (2) is provided with a a line of perforations, which is designed to define a portion or area (6,7) of an appropriate shape that can be separated, by being detached, from said side part (2);
said portion or area (6,7) being of a length such as to enable the disk to come out of the envelope, **characterized in that**
said remaining side part (3') provides a space for the message and/or one or more images by the sender; said space for the data of the addressee and for the stamps being provided on the opposite surface of the foldable side part (2'), and
in order to hide appropriately from view the message and/or the images of the sender, said remaining side part (3') is divided into two adjacent portions: a first portion (3'A) set alongside to the first part (1), and a second, end, portion (3'B) that is configured to be folded in book fashion on said first portion (3'A) and that is configured to be glued thereto.

2. The postal envelope according to the preceding claim, **characterized in that**, in order to glue the end edge of the foldable side part (2) on the corresponding area of the first part (1), an adhesive area (A) is provided on said corresponding area of the first part and/or on said end edge of the side part (2); thus obtaining that, in order to take the CD out, it is sufficient to remove the detachable area (6,7) from said side part (2) and pull out the CD.

3. The postal envelope according to the preceding claim, **characterized in that**, in order to enable the second, end, portion (3'B) to be folded in book fashion on the adjacent one (3'A), a transverse folding line is provided between said two portions; said transverse folding line being perforated to enable the user to separate, by detaching it, the second, end, portion (3'B) from the first portion (3'A).

4. The postal envelope according to Claim 1, **characterized in that**, in order to glue the two portions (3'A, 3'B) to one another, an gluing area (A') is provided on the area involved of the first portion (3'A) and/or on the end edge of the second foldable portion (3'B).

5. The postal envelope according to the preceding claim, **characterized in that** said end edge is delimited by a line of perforations (20), which is designed to enable opening of the portions (3'A, 3'B) by the addressee; thus obtaining that, in order to read the message and/or see the images of the sender, it is sufficient to tear the second portion (3'B) away from its end edge and open said portion (3'B).

6. The postal envelope according to Claim 1 **characterized in that** the opposite surface of the second, end, portion (3'B) is provided with a space for an advertising and/or promotional message and/or a picture and/or a decoration and/or a further message by the sender.

7. The postal envelope according to claim 1 **characterized in that**
- Said remaining side part (3'), is reserved for the message and/or one or more images by the sender, as well as being provided with a space for the data of the addressee and for the stamps;
said space for the data of the addressee and for the stamps being on the opposite surface of the second, end, portion (3' B).

## Patentansprüche

1. Versandtasche zur Aufnahme eines oder mehrerer zweidimensionaler Objekte, insbesondere mindestens einer CD oder DVD, die eine Bahn umfasst, die eine im Wesentlichen rechteckige Form aufweist und in mindestens zwei Teile unterteilt ist:
- einen ersten Teil (1), der zur Aufnahme mindestens einer Speicherplatte ausgelegt und mit zwei gegenüberliegenden faltbaren Klappen (4, 5) versehen ist, die verhindern sollen, dass die Speicherplatte aus der Tasche herausfällt, und
- einen faltbaren seitlichen Teil (2), der dafür ausgelegt ist, in der Weise eines Buches auf den ersten Teil (1) gefaltet zu werden, und der auf den ersten Teil geleimt werden kann, um die Speicherplatte zu bedecken, die auf dem ersten Teil aufgenommen ist, aber nicht einen Abschnitt des ersten Teils zu bedecken, der dem übrigen seitlichen Teil (3') des ersten Teils entspricht, wobei
der faltbare seitliche Teil (2) mit einer Perforationslinie versehen ist, der dafür ausgelegt ist, einen Abschnitt oder Bereich (6, 7) von einer geeigneten Form zu definieren, der durch Abtrennen von dem seitlichen Teil (2) abgenommen werden kann; und
der Abschnitt oder Bereich (6, 7) von einer solchen Länge ist, dass es der Speicherplatte möglich ist, aus der Tasche auszutreten, **dadurch gekennzeichnet, dass** der übrige seitliche Teil (3') einen Platz für die Nachricht und/oder ein oder mehrere Bilder vom Absender bereit hält; wobei der Platz für die Daten des Adressaten und für die Briefmarken auf der gegenüberliegenden Fläche des faltbaren seitlichen Teils (2') angeordnet ist, und um die Nachricht und/oder die Bilder des Absenders dem Blick vollständig zu verbergen, der übrige seitliche Teil (3') in zwei benachbarte Abschnitts unterteilt ist: einen ersten Abschnitt (3'A), der entlang des ersten Teils (1) angeordnet ist, und einen zweiten Abschnitt, den Endabschnitt (3'B), der dafür ausgestaltet ist, in der Weise eines Buches auf den ersten Abschnitt (3'A) gefaltet zu werden, und der dafür ausgestaltet ist, daran festgeleimt zu werden.

2. Versandtasche nach dem vorhergehenden Anspruch, **dadurch gekennzeichnet, dass**, um den Abschlussrand des faltbaren seitlichen Teils (2) auf den entsprechenden Bereich des ersten Teils (1) zu leimen, ein Klebstoffbereich (A) auf dem entsprechenden Bereich des ersten Teils und/oder auf dem Abschlussrand des seitlichen Teils (2) angeordnet ist, wodurch erreicht wird, dass es, um die CD herauszunehmen, genügt, den ablösbaren Bereich (6, 7) von dem seitlichen Teil (2) abzutrennen und die CD herauszuziehen.

3. Versandtasche nach dem vorhergehenden Anspruch, **dadurch gekennzeichnet, dass**, damit der zweite Abschnitt, der Endabschnitt (3'B), in der Weise eines Buches auf den benachbarte Abschnitt (3'A) gefaltet werden kann, eine quer verlaufende Falzlinie zwischen den zwei Abschnitten angeordnet ist, wobei die quer verlaufende Falzlinie perforiert ist, um es dem Nutzer zu ermöglichen, den zweiten Abschnitt, den Endabschnitt (3'B), durch Abtrennen von dem ersten Abschnitt (3'A) abzunehmen.

4. Versandtasche nach Anspruch 1, **dadurch gekennzeichnet, dass**, um die zwei Abschnitte (3'A, 3'B) aneinander zu kleben, ein Leimungsbereich (A') auf dem involvierten Bereich des ersten Abschnitts (3'A) und/oder auf dem Abschlussrand des zweiten faltbaren Abschnitts (3'B) angeordnet ist.

5. Versandtasche nach dem vorhergehenden Anspruch, **dadurch gekennzeichnet, dass** der Abschlussrand durch eine Perforationslinie (20) begrenzt ist, die dafür ausgelegt ist, dem Adressaten das Öffnen der Abschnitte (3'A, 3'B) zu ermöglichen, wodurch erreicht wird, dass es, um die Nachricht des Absenders zu lesen und/oder die Bilder des Absenders zu sehen, genügt, den zweiten Abschnitt (3'B) von seinem Abschlussrand abzureißen und den Abschnitt (3'B) zu öffnen.

6. Versandtasche nach Anspruch 1, **dadurch gekennzeichnet, dass** die gegenüberliegende Fläche des zweiten Abschnitts, des Endabschnitts (3'B), mit einem Platz für eine Werbe- und/oder Verkaufsförderungsnachricht und/oder ein Bild und/oder eine Verzierung und/oder eine weitere Nachricht vom Absender versehen ist.

7. Versandtasche nach Anspruch 1, **dadurch gekennzeichnet, dass** der übrige seitliche Teil (3') der Nachricht und/oder einem oder mehreren Bildern vom Absender vorbehalten ist sowie mit einem Platz für die Daten des Adressaten und für die Briefmarken versehen ist, wobei der Platz für die Daten des Adressaten und für die Briefmarken auf der gegenüberliegenden Fläche des zweiten Abschnitts, des Endabschnitts (3'B), angeordnet ist.

## Revendications

1. Enveloppe postale conçue pour contenir un ou plusieurs objets se développant de façon bidimensionnelle, en particulier au moins un CD ou un DVD, comprenant une feuille ayant une forme sensiblement rectangulaire, qui est divisée en au moins deux parties :
une première partie (1) conçue pour recevoir au moins un disque et dotée de deux rabats pliables opposés (4, 5) conçus pour empêcher le disque de sortir de l'enveloppe, et
une partie latérale pliable (2) qui est conçue pour être pliée de la façon d'un livre sur ladite première partie (1) et qui peut être collée sur ladite première partie, afin de couvrir le disque reçu sur ladite première partie mais pas de couvrir une portion de la première partie qui correspond à la partie latérale restante (3) de la première partie, dans laquelle
la partie latérale pliable (2) est dotée d'une ligne de perforations, qui est conçue pour définir une portion ou zone (6, 7) d'une forme appropriée qui peut être séparée, en étant détachée, de ladite partie latérale (2) ;
ladite portion ou zone (6, 7) étant d'une longueur permettant de faire sortir le disque de l'enveloppe, **caractérisée en ce que**
ladite portion latérale restante (3') prévoit un espace pour le message et/ou une ou plusieurs images par l'expéditeur ; ledit espace pour les données du destinataire et pour les timbres étant situé sur la surface opposée de la partie latérale pliable (2'), et
dans le but de cacher de façon appropriée de la vue le message et/ou les images de l'expéditeur, ladite partie latérale restante (3') est divisée en deux portions adjacentes : une première portion (3'A) installée le long de la première partie (1), et une seconde portion, d'extrémité (3'B) qui est configurée pour être pliée de la façon d'un livre sur ladite première portion (3'A) et qui est configurée pour être collée à cette dernière.

2. Enveloppe postale selon la revendication précédente, **caractérisée en ce que**, afin de coller le bord d'extrémité de la partie latérale pliable (2) sur la zone correspondante de la première partie (1), une zone adhésive (A) est prévue sur ladite zone correspondante de la première partie et/ou sur ledit bord d'extrémité de la partie latérale (2) ; obtenant ainsi qu'il suffise, pour sortir le CD, de retirer la zone détachable (6, 7) de ladite partie latérale (2) et de tirer le CD hors de l'enveloppe.

3. Enveloppe postale selon la revendication précédente, **caractérisée en ce que**, afin de permettre à la seconde partie, d'extrémité (3'B) d'être pliée de la façon d'un livre sur celle adjacente (3'A), une ligne de pliage transversale est prévue entre lesdites deux portions ; ladite ligne de pliage transversale étant perforée pour permettre à l'utilisateur de séparer, en la détachant, la seconde portion, d'extrémité (3'B) de la première portion (3'A).

4. Enveloppe postale selon la revendication 1, **caractérisée en ce que**, afin de coller les deux portions (3'A, 3'B) l'une à l'autre, une zone de collage (A') est prévue sur la zone impliquée de la première portion (3'A) et/ou sur le bord d'extrémité de la seconde potion pliable (3'B).

5. Enveloppe postale selon la revendication précédente, **caractérisée en ce que** ledit bord d'extrémité est délimité par une ligne de perforations (20), qui est conçue pour permettre l'ouverture des portions (3'A, 3'B) par le destinataire ; obtenant ainsi qu'il suffise, pour lire le message et/ou voir les images de l'expéditeur, d'arracher la seconde portion (3'B) de son bord extérieur pour ouvrir ladite portion (3'B).

6. Enveloppe postale selon la revendication 1, **caractérisée en ce que** la surface opposée de la seconde portion, d'extrémité (3'B) est dotée d'un espace pour un message publicitaire et/ou promotionnel et/ou un cliché et/ou une décoration et/ou un message supplémentaire de l'expéditeur.

7. Enveloppe postale selon la revendication 1, **caractérisée en ce que**
- ladite partie latérale restante (3') est réservée au message et/ou à une ou plusieurs images de l'expéditeur, ainsi qu'à être pourvue d'un espace pour les données du destinataire et pour les timbres ; et
ledit espace pour les données du destinataire et pour les timbres étant sur la surface opposée de la seconde portion, d'extrémité (3'B).
